# EUROPEAN PATENT SPECIFICATION

(11) **EP 2 107 327 B1**
(45) Date of publication and mention of the grant of the patent: **30.05.2012**
(21) Application number: 09384801.8
(22) Date of filing: 13.03.2009
(51) Int. Cl.: F27B 3/08, F27B 3/26, F27D 17/00, F28C 1/08, C21C 5/56, C21C 5/52, F27D 13/00, C21C 5/46

(54) **Thermal gas flow control system in the electric arc furnace**
Thermisches Gasströmungsregelungssystem in elektrischen Bogenöfen
Système de contrôle de l'écoulement de gaz dans un four à arc électrique

(30) Priority: 02.04.2008 ES 200801035
(43) Date of publication of application: 07.10.2009
(73) Proprietor: Guiu Lapresta, Javier, 5004 Zaragoza (ES)
(72) Inventor: Guiu Lapresta, Javier, 5004 Zaragoza (ES)

(56) References cited:
- US-A- 5 375 139
- US-A- 5 479 434

## Description

System by which the gas flow that exists inside the electric arc furnace is directed with control across the scrap, which acts as a filter, where the gases release their energy, carrying out, in this way, the appropriate auto-pre heating of the loaded material inside the furnace vessel. The system is based on the location of at least two gas exits placed in the furnace vessel, and are connected to the exhausting fumes installation as set forth in claim 1.

### Field of application

The invention is applied in the field of steel production and, inside the aforementioned, in the Electric Arc Furnace, which is powered by direct or alternating current, but can be applied to any type of furnace that uses the energy generated by the electric arc, as a main energetic source of the Process, just like some ferro-alloys industry.

### State of the Art.

In the electric arc furnace used mainly for the steelmaking process, the transfer of the thermal energy from the arc to the scrap is realized, almost exclusively, by radiation.

During the "bore down" process originated by the energy of the electric arc, and for the whole smelting period, a progressive hole or space is created between electrode(s) and scrap or mixture of scrap with ferric material. That hollow acts as priority route or way for hot gas evacuation. A big part of the energy contained in these gases is evacuated with them through the so called "fourth hole", a device which is placed on the top part of the furnace roof, due to the high speed at which the aforementioned gases leave the furnace, which is a consequence of their density as well as of the pressure difference that exists between the inside and outside.

In order to optimize the energy consumption and increase productivity in electric the Electric Melt Shops, systems and/or techniques have been developed, which are based on different concepts, such as: the massive use of fossil energies; an attempt to confine gases inside to the furnace; autonomous vessel(s) station(s) scrap preheating; energy recovery from waste gas in order to preheating the scrap located it in vessels outside the furnace or feeding it continuously or on intermittent form.

US Pat.5375139 teaches an injection system, to modify the gas flow inside the furnace, preheating the scrap this way. This patent makes reference to another previous development with the same objective (EP Pat. 0462898 - US Pat.5166950).

US Pat 6748004 teaches that it is usual to act on the control of the exhausting fumes installation, in order to maintain a correct depression and extract from the furnace the lowest energy possible, prolonging the stay of the gases inside the furnace, and preheating the scrap on this form.

The loss of energy in the processes indicated in the cases before mentioned (US Pat. 5375139 and others) is high. The gases act "sweeping" and evacuating as much energy the bigger the injected gas volume is, due to the increase of pressure inside the vessel which increases the speed of evacuation, since the gas flow moves mainly through the spaces free of obstacles, which are "connected" to the "fourth hole" placed in the roof, an event that already happens from the beginning of the smelting period.

Furthermore, the gases, in these cases, only interact with the surface of the load, which is already very hot, which represents a low gas/scrap thermal gradient, and reduces the energy exchange or transfer.

Other systems have been developed, which carry out the preheating outside the furnace vessel. The state of the Art (US Pat. 6157664) shows a system to recovery the most of the energy that is evacuated from the furnace through the "fourth hole", and is based on scrap charged vessels connected in line between the aforementioned fourth hole and the exhausting fumes installation.

This patent exposes the operating capacity problems that a series of previous developments involve (EP Pat. 225939 - WO Pat. 95/12690 WO Pat. 96/32616 EP Pat 636698) all of them referring to preheating the scrap placed in vessels outside the furnace.

The state of the Art (US Pat.6274081) also shows the development carried out regarding preheating the scrap, a preheating device through to a hopper placed outside the furnace shell (inserted in the roof of the aforementioned and connected with the exhaust fumes installation). In this case, the fumes discharged from the furnace, travel through the scrap, placed in the aforementioned hopper or shaft, releasing in this way a big part of their energy into it, carrying out the consequent preheating of the load.

(EP Pat. 0190313 - WO Pat. 86/01230) teach a preheating system using the energy of the gases that exit the furnace, making them move counter current with the direction of the scrap charge, a process which is carried out through a long tunnel, where a feeding system is installed for that purpose.

The scrap preheating systems outside the furnace, mentioned previously, present problems such as:
- Difficulty of obtaining a fluid bed through which gases can flow (US 6157664) and all the operational problems indicated in this patent about the ones mentioned in it (EP 225939 etc.)
- Difficulty of controlling the drop of scrap from the shaft - hopper to the shell of the furnace (US 6274081) a situation that causes the breakage of electrodes.
- There are also common inconveniences to the patents (US Pat.6274081 - EP Pat. 0190313) in which the absence of scrap in the areas of the furnace that are farther away from the area where the load falls, causes the premature exposure of the vessel walls, which are exposed to the aggressive action of the electric arc. This circumstance prevents the usage of high electric power, decreasing productivity this way, at the same time it leads to a deterioration of the refractory. Moreover, in these Systems, it is not possible to use any kind of scrap, due to operational problems (uncontrolled load drop - not continuous feeding control) requiring to select the scrap quality, which involves the increase product's price.

The state Art (US Pat. 5479434 A) discloses a double furnace installation in which the scrap is pre-heated in a furnace vessel using hot gas from another operating furnace vessel in which melting takes place

Apart from the difficulties mentioned, these systems require huge facilities, which translate into high investment and maintenance costs.

Taking into account all of these circumstances, the solution to the problems exposed, would involve the usage of an efficient system of preheating the load inside the furnace, avoiding the construction of onerous elements outside the vessel and its operational difficulty.

The invention that is laid out here solves in a simple way, the aforementioned inconveniences, adding a new system for collecting, regulating and controlling the gases, that come from the combustion of the organic products included in the scrap as well as from the gases produced due to the combustion of additions supplied in solid as well as gaseous form. This invention allows us to conduct the gaseous flow from the place where these gases generate, to the exhausting fume installation, always through the solid load, creating close contact of the masses and carrying out in this way the process preheating process inside the furnace vessel.

### Description of the invention

This invention, which process is exposed in claim number 1 and relates apparatus in claim number 2, is based on a full criteria change in the concept of scrap preheating, defining it as making thermal energy go through the scrap to produce the aforementioned effect. The State of the Art, which was previously synthesized, indicates that the preheating of the scrap in current facilities is carried out, almost every time in vessels or tunnel outside the electric arc furnace or vessel attached to the roof of the furnace.

Unlike the current options, with this invention, the preheating is made inside the furnace, as, from the moment the electrodes begin to transfer thermal energy, gases generated and blow into the furnace, which carry the energy that has not been transferred to the scrap, are not evacuated through the "fourth hole" but they are conducted - forced - directed downwards through the scrap, towards the holes or exits gas that have been placed around the shell of the furnace, instead of the roof of the furnace.

With this invention, the opposition that the scrap puts up to the evacuation of gases, creates a noticeable decrease in the escape speed of the aforementioned, because, they cannot do it through the "fourth hole, since it has been blocked or eliminate, but by the gas exits made on the shell of the furnace, extending this way their stay in the vessel since they cannot escape naturally. This effect, added to the fact that the gases are taken and forced controllably through the scrap to the exits through the action of the fume treatment installation, allows its circulation to be carried out through the clear spaces in the scrap, achieving an efficient thermal exchange

Due to the relatively small apparent mass of scrap placed between the electrode(s) and/or burner(s) and the gas exits, a fluid bed is achieved at all times which allows the correct control - regulation of the process, without needing to big powered exhaust system, which are typical of other furnace systems where gases must pass through a big pile of scrap, and the lack of permeability of it can sometimes prevent the correct fume evacuation, which causes them to flow to the exterior of the furnace.

This system, also impedes that the air that ingress through the slag door, takes away energy from the process, since one of the gas exits- evacuation - suction zone is placed on the external top part of the tunnel door, where the door is usually placed so, this air, will be sucked up and conducted directly to the exhausting fumes installation, without coming in contact with the scrap, at the same time the said air is able to burn the CO, preventing possible explosions in the exhausting fumes installation and it also decreases fumes temperature.

For means of a suitable alternating and modulating valves regulation that are placed on the system with such purpose is possible to obtain a rotary-sweeping movement of gas to increasing energetic yield and a good thermal homogeneity.

The invention allows to place the oxy-burners in the upper part of the furnace shell where the danger of plugging is minimal and it also allows to maintain them active exclusively, when necessary, turning them Off and On at will, since there is no risk of the flame bouncing off. Currently, the oxy-burners must stay constantly ON to prevent blockages. Since this system prevents air from entering the furnace through the slag door, oxygen and gases can be supplied through any of the external methods (manipulators, etc.) positioned in a traditional way through said slag door, without needing to keep the fixed oxy-burner(s) operative constantly.

### System Advantages

- Reduction of energy consumption, due to the use of the gas heat to preheat the scrap, as well as preventing air ingress through the slag door and contacting the scrap.
- Possibility of using higher electric power, as there are no hot spots, which implies a higher productivity.
- Increase in the stability of the arc, due to the thermal homogeneity, which translates into a better electric - thermal performance. Lower Power ON time.
- Oxygen and gas consumption reduction, due to the placement of the oxy-burners, which allows us to use them according to the requirements needed.
- Electrode consumption reduction - less oxidation - Less scrap drops that create breakages - Lower Power Off time for this reason.
- Refractory consumption reduction, due to: lower Power ON time, better thermal homogeneity and absence of hot spots.
- Increase in productivity (due all items before)
- Oxy-burners maintenance cost reduction due to their alternating use and upper position location.
- Due to in this system is not necessary to use the "fourth hole", the mechanical stability during the roof opening is improved, as there is a reduction of its total weight, in addition to easing the existing inertial problems on the opening/closing system.
- Because one of the gas exits is placed on the slag door of the furnace, this zone will stay free of scrap, thus avoiding the necessity to carry out cleaning operations, with the advantages this offers in safety, as well as in machinery savings on this matter.
- In this system, the general collector of the exhaust installation is placed at a height that is quite lower to that of conventional furnaces and under level of the roof. Therefore, there is no interference between the scrap basket and the shell of the furnace, allowing carrying out the load of liquid or solid scrap or slag, either from the from or from the side, as well as to the exchange of electrodes with ease and safety.
- The invention can be applied to any kind of electric conventional furnace, in new furnaces as well as revamping existing ones. The investment is considerably lower to that of the current systems with preheating outside the furnace.
- The adaptation of the system is carried out with a minimal production stop time.

### Drawing explanation

The drawings attached show an example, non -binding, of the lay out of the invention.

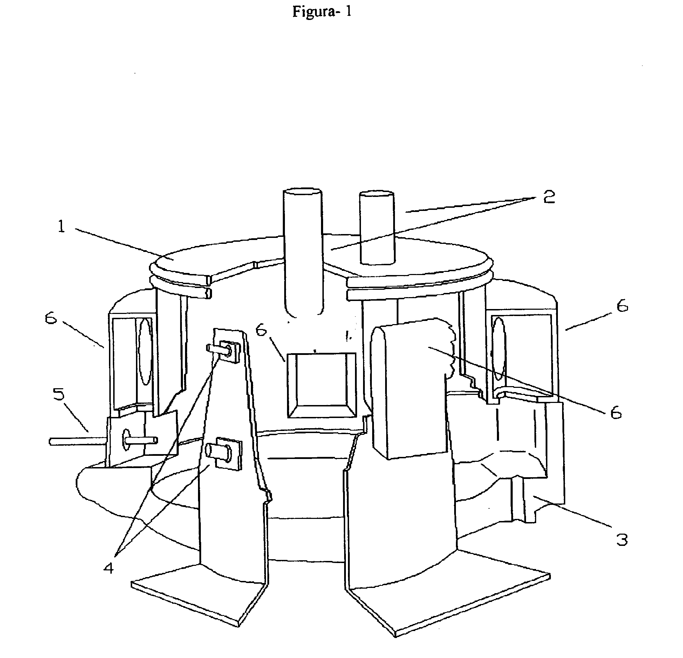

Fig. 1 shows the panoramic picture of the furnace, including the new System, where are indicated: the roof (1), electrodes (2) EBT tapping hole or similar (3).

It can be seen that in the roof there is not - though it is possible- a traditional fourth hole to conduct the fumes. The optional location of burners or double oxy -carbon injection devices are shown in the furnace shell (4) as well as the slag door (5). The extraction or conduction of gas, the main object of the invention, is carried out through the gas exits (6) placed on the furnace vessel (4)

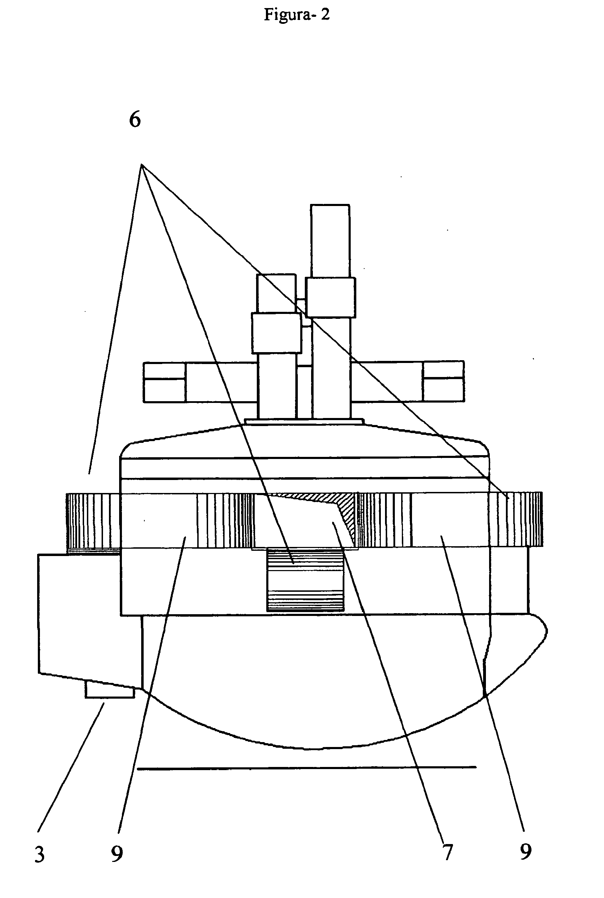

Fig. 2 shows a side view of the furnace, where we can see: the tapping hole (3), the gas exits (6), the connect junction between the gas exits (9) all them converge in a main collector (7) and are connected to the exhausting fumes installation throw a duct connection (8).

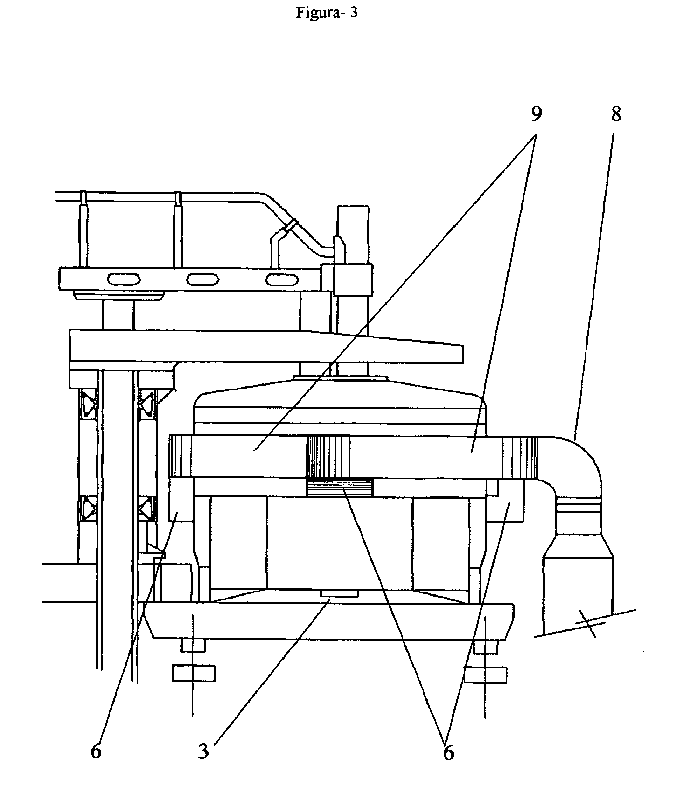

Fig. 3 shows a front view of the furnace, where are indicated: the tapping hole (3), the gas exits (6), the collectors to these gas exists (9) and the exhausting fumes installation duct connection (8)

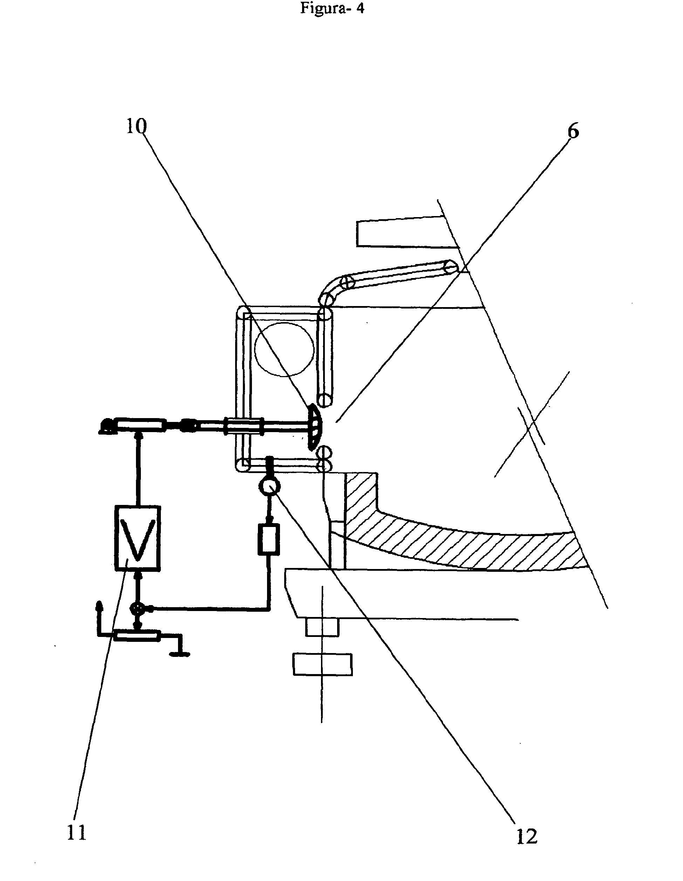

Fig. 4 shows a sketch of the regulation and system control. It can be seen the open-close device (10) temperature- pressure sensor (12 and regulation circuit (11)

Fig. 5 shows an example of control and conduction of the Process where, based on predetermined variables, different opening - closing devices are activated.

### Process

The scrap or mix with HBI-DRI is loaded into the baskets as usually and unloaded inside the furnace shell previous roof opening.

In order to accelerate the smelting process, carbon or elements that carry carbon, can be added to the scrap or during smelting process through carbon-oxygen injection devices.

When roof furnace is turn on and closing the vessel electric energy is switch on and oxy-burners located preferably in the upper part of furnace are switch on. The preheating of the scrap is made initially from up to down, unlike in any other current furnace. Because the gases that carry energy cannot leave the furnace from its top part, they must do it through the gas exits made on the lower part of the furnace vessel, opposite to which the scrap remains until its complete melt.

In the course of smelting period, the regulation system activates the valves installed on the gas exits for this purpose, allowing automatically opening or closing each one of them individually, according to the signals received through the elements of control installed. By closing the hottest gas exits, is possible to lead the gases to the coldest zones, which transfer their energy to the scrap that remains solid.

The control system enables us to identify when a zone of the furnace is melted and to proceed to the protection of the wall refractory and the panels by automatically adding carbon or other additives, which will generate the foamy slag that is needed for that purpose. The re-oxidation or post-combustion of its main gaseous component (CO) due the simultaneous oxygen injection from any furnace point will transform it to CO2. This gas, as a consequence of the design of the furnace, is conducted - forced to the exit gas zone where there is still scrap that has not been melted, carrying out its preheating function. Data are taken from the different gas exists of the furnace, allowing know the process in real time and proceed to reload a new charge just in time.

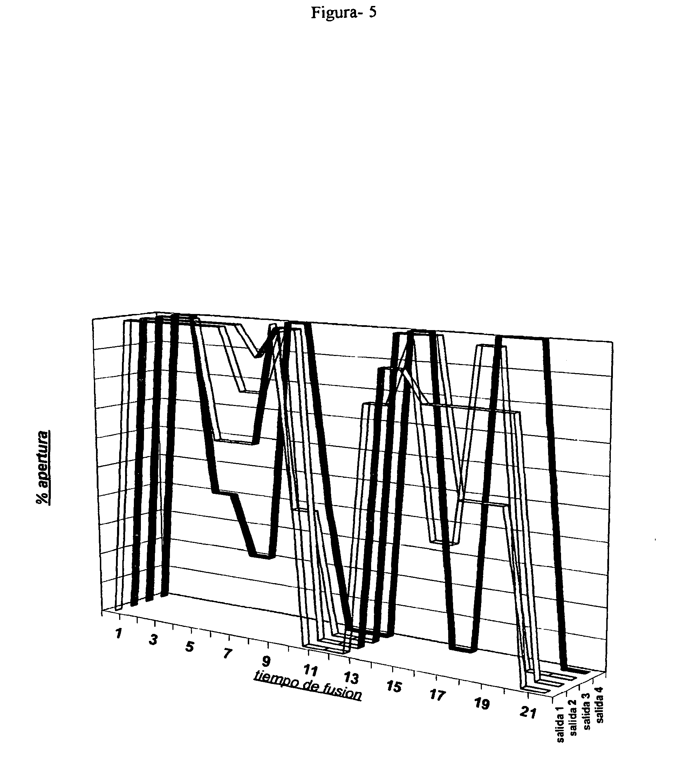

Once all the scrap or load has been melted, as is shown in figure 5, the Process takes place in the usual way to carry out the metallurgical and thermal work, up to the tilting time

## Claims

1. Process to preheat scrap inside an electric arc furnace vessel whereby a gas flow is forced to go downward through the charged scrap in order to obtain an optimal scrap preheating and homogeneous thermal charge by sending more energy the coldest zone and said hot gas flow is driven towards the furnace cold spots zones in order to carry out both the gas flow control process for the scrap preheating and the scrap melting on a homogeneous and simultaneous manner wherein, at least two gas exists are positioned in the lower part of the furnace vessel including the slag door and the upper part to tap-hole zone (3) and are connected to the exhausting fumes installation and said gas exits comprise open-closing regulation system and temperature-pressure sensors, **characterized in that** the process comprises the following steps:
- Charge scrap in the electric arc furnace vessel
- Input electric energy to the electrode (s) and fossil energy
- Control the temperature in each gas exit
- Regulate the opening/closing level as a function of temperature-pressure values.
- Once all scrap has been melted the process is similar to a conventional furnace by carry out a metallurgical and thermal work up to the tilting time

2. Apparatus to carry out the process of claim 1 in order to preheat scrap inside an electric arc furnace vessel comprising at least two gas exits (6) positioned in the lower part of the furnace vessel including the slag door (5) and the upper part to tap-hole zone (3) and said gas exits are connected to the exhausting fumes installation, **characterized in that** said gas exists (6) comprise an open-closing valve or device (10) a regulation system (11) and temperature-pressure sensors.(12)

3. Apparatus to preheat scrap inside an electric arc furnace according to claim 2 **characterized in that** the open-close devices, are activated through an electric, hydraulic or pneumatic regulation system.

## Patentansprüche

1. Prozess für die Vorerwärmung des Schrotts im Inneren des Schachts eines Elektrolichtbogenofens, wo der Gasfluss nach unten durch den beschickten Schrott geleitet wird, um eine optimale Vorerwärmung und eine homogene Wärmeverteilung zu erzielen, wobei in den kühleren Bereich mehr Energie gesendet wird. Um eine gleichzeitige und homogene Steuerung des Wärmestroms für die Vorerwärmung und den Schmelzvorgang des Schrotts zu erzielen, wird der heiße Gasstrom zu den kühlen Stellen des Ofens geleitet, wo mindestens zwei Gasaustritte im unteren Teil des Ofens angebracht wurden, einschließlich der Schlackeabzugstür und des oberen Teils der Gussöffnung, die an die Abgasreinigungsanlage angeschlossen sind. Diese Abgasleitungen umfassen ein System zur Regulierung von Öffnung und Schließung sowie Druck- und Temperatursensoren, **dadurch gekennzeichnet, dass** der Prozess die folgenden Arbeitsschritte umfasst:
- Schrottbeschickung im Schacht des Elektrolichtbogenofens.
- Anschluss der elektrischen Energiequelle mittels Elektrode(n) und Zusatz von fossiler Energie.
- Temperaturkontrolle an jedem Gasaustritt.
- Regulierung von Öffnung und Schließung in Abhängigkeit von den Werten Temperatur und Druck.
- Nach der Schmelze des Schrotts ist der Prozess ähnlich wie der eines herkömmlichen Ofens mit der metallurgischen und thermischen Arbeitsphase bis zur Entleerung.

2. Vorrichtung zur Durchführung des Prozesses nach Anspruch 1 mit der Zielsetzung, den Schrott im Inneren des Schachtes eines Elektrolichtbogenofens vorzuerwärmen, der mindestens zwei Gasaustritte (6) am unteren Teil des Ofenschachtes aufweist, einschließlich des Bereichs der Schlackeabzugstür (5) und des oberen Teils des Bereichs des Gussöffnung (3), wobei diese Gasaustritte an die Abgasreinigungsanlage angeschlossen sind; **dadurch gekennzeichnet, dass** diese Gasaustritte (6) ein Ventil bzw. eine Vorrichtung für Öffnung und Schließung (10), ein Regelsystem (11) und Sensoren für Temperatur und Druck (12) aufweisen.

3. Vorrichtung zur Vorerwärmung des Schrotts im Inneren eines elektrischen Bogenöfen nach Anspruch 2, **dadurch gekennzeichnet, dass** die Systeme für Öffnung und Schließung mittels eines elektrischen, hydraulischen oder pneumatischen Regelsystems betätigt werden.

## Revendications

1. Procédé de préchauffage de ferraille à l'intérieur de la cuve d'un four à arc électrique, dans lequel, le flux de gaz est forcé à descendre, au travers de la ferraille chargée, afin d'obtenir un préchauffage optimum et une distribution thermique homogène, transmettant davantage d'énergie à la zone la plus froide. Pour parvenir de façon homogène et simultanée au procédé de contrôle de flux thermique par le préchauffage de ferraille ainsi que sa fusion, ce flux de gaz chaud est acheminé vers les zones de points froids du four où sont installées, au moins, deux sorties de gaz, situées sur la partie inférieure de la cuve du four, y compris la porte de décrassage et la partie supérieure de l'orifice de coulée et sont raccordées à l'installation d'épuration des fumées. Ces sorties de gaz comprennent un système de réglage ouverture-fermeture et des capteurs de pression-température, **caractérisé par** que le fait que le procédé comprend les étapes suivantes:
- Charger la ferraille dans la cuve du four à arc électrique.
- Brancher la source d'énergie électrique à l'aide de l'électrode (s) et apporter de l'énergie fossile.
- Contrôler la température à chacune des sorties de gaz.
- Régler le niveau d'ouverture-fermeture en fonction des valeurs de température-pression.
- Lorsque toute la ferraille est fondue, le procédé est similaire à celui d'un four conventionnel, le travail métallurgique et thermique s'effectue jusqu'au renversement.

2. Appareil destiné à effectuer le Procédé conformément à la revendication 1 afin de préchauffer la ferraille à l'intérieur de la cuve du four à arc électrique, qui comprend au moins deux sorties de gaz (6) situées sur la partie inférieure de la cuve du four, y compris la porte de décrassage(5) et la partie supérieure de la zone de l'orifice de coulée (3) ces sorties sont raccordées à l'installation d'épuration des fumées, **caractérisé par le fait que** ces sorties de gaz (6) comprennent un clapet ou dispositif d'ouverture-fermeture (10) un système de réglage (11) et des capteurs de température -pression (12).

3. Appareil destiné au préchauffage de la ferraille à l'intérieur du four a arc électrique, conformément à la revendication 2, **caractérisé par le fait que** les dispositifs du système ouverture-fermeture sont actionnés à l'aide d'un système de réglage électrique, hydraulique ou pneumatique.
